# EUROPÄISCHE PATENTSCHRIFT

(11) **EP 0 492 270 B1**
(45) Veröffentlichungstag und Bekanntmachung des Hinweises auf die Patenterteilung: **24.04.1996**
(21) Anmeldenummer: 91121200.9
(22) Anmeldetag: 11.12.1991
(51) Int. Cl.: H01R 43/24, B29C 45/14, B29C 45/06

(54) **Vorrichtung zum Anbringen eines Teils eines elektrischen Steckverbinders an einer Leitung**
Device for applying a part of an electrical connector to a cable
Dispositif pour appliquer une pièce d'un connecteur électrique à un câble

(30) Priorität: 24.12.1990 DE 4041783
(43) Veröffentlichungstag der Anmeldung: 01.07.1992
(73) Patentinhaber: kabelmetal electro GmbH, D-30002 Hannover (DE)
(72) Erfinder: Wiemeyer, Hans Heinrich, Dipl.-Ing., W-7562 Gernsbach (DE); Zimmer, Dieter, W-7553 Muggensturm (DE)

(56) Entgegenhaltungen:
- DE-A- 2 514 488
- DE-A- 3 720 041
- FR-A- 1 458 756
- PATENT ABSTRACTS OF JAPAN vol. 9, no. 202 (M-405)(1925) 20. August 1985 & JP-A-60 064 821 (SEIKISUI KAGAKU KOGYO K.K.) 13. April 1985

## Beschreibung

Die Erfindung bezieht sich auf eine Vorrichtung zum Anbringen eines Teils eines elektrischen Steckverbinders am Ende einer mindestens eine Ader aufweisenden elektrischen Leitung, bestehend aus einer Einrichtung, mit der die Leitung mit taktweisem Vorschub durch Bearbeitungsstationen transportierbar ist, in denen die Ader der Leitung abisoliert und an dem dadurch freigelegten Leiter der Ader ein Kontaktelement angebracht wird, und bei welcher als letzte Bearbeitungsstation eine Spritzgießeinheit angeordnet ist, in der um das Kontaktelement und das Leitungsende ein Schutzkörper aus Isoliermaterial herumgespritzt wird (DE-A-37 20 041).

"Teil eines elektrischen Steckverbinders" kann ein Stecker oder eine Dose sein. Als Kontaktelemente sind Stifte oder Buchsen an dem Leiter der Ader angebracht. Leitungen, bei denen ein Stecker oder auch eine Dose unlösbar an einem Ende angeformt sind, werden als "konfektionierte" Leitungen bezeichnet. Bei solchen Leitungen bleibt das zweite Ende in der Regel frei. Die Leitungen werden beispielsweise als Halbfabrikate an die Verbraucherindustrie weitergegeben, welche dieselben an beliebige elektrische Geräte anbaut. Hierzu ist es erforderlich, daß auf der einen Seite der gewünschte Teil des Steckverbinders an die Leitung angespritzt und die andere Seite der Leitung so vorbereitet wird, daß sie ohne zusätzlichen Aufwand an das Gerät angeschlossen werden kann. Es sind allerdings auch konfektionierte Leitungen bekannt, bei denen an beiden Enden Teile von Steckverbindern angebracht sind.

Mit der bekannten Vorrichtung nach der DE-C3-24 40 264 wird nach Festlegung von Kontaktelementen an den Leitern einer elektrischen Leitung der Schutzkörper eines Steckers unter Ausnutzung der Kapazität von vorhandenen Spritzmaschinen in einem getrennten Arbeitsgang gespritzt. Dadurch arbeitet die bekannte Vorrichtung insgesamt aufwendig, da nicht alle für die Herstellung einer konfektionierten Leitung erforderlichen Arbeitsgänge vollautomatisch durchgeführt werden können.

Aus der FR-A-1 458 756 ist eine als Rundtisch ausgeführte Vorrichtung zum Umspritzen von elektrischen Steckern angegeben, die am Ende einer elektrischen Leitung angebracht sind. Dazu werden zunächst Steckerstifte mit den Leitern der Leitung verbunden. Das so vorbereitete Leitungsende wird in einer Ladestation auf dem Rundtisch angebracht. Durch Drehen des Rundtisches gelangt das Leitungsende in eine weitere Station, in welcher eine erste Schicht Isoliermaterial um Steckerstifte und Leitungsende herumgespritzt wird. Der so hergestellte Spritzkörper wird in der nächsten Station abgekühlt. In der folgenden Station wird eine weitere Schicht Isoliermaterial um die erste Schicht herumgespritzt, durch welche der Schutzkörper des Steckers fertiggestellt wird. Die so konfektionierte Leitung kann in einer folgenden Station vom Rundtisch abgenommen werden.

Bei der bekannten Vorrichtung nach der eingangs erwähnten DE-A-37 20 041 wird das mit den Kontaktelementen bestückte Ende der Leitung unter Beibehaltung des taktweisen Vorschubs durch mindestens zwei Spritzgießeinheiten geführt. In jeder Spritzgießeinheit wird ein Teilkörper des zu erzeugenden Schutzkörpers gespritzt. Die Materialmenge der Teilkörper ist jeweils so bemessen, daß derselbe während der durch den Takt bestimmten Zeit ausreichend fest wird, um ohne Beschädigungsgefahr weitertransportiert werden zu können. Mit dieser Vorrichtung kann zwar in einem Arbeitsgang eine konfektionierte Leitung hergestellt werden. Der Aufwand dafür ist aber relativ hoch, da für jeden Teilkörper eine eigene Spritzgießeinrichtung benötigt wird. Die Teilkörper müssen außerdem mit großer Sorgfalt gespritzt werden, damit sichergestellt ist, daß sich ein homogener Schutzkörper ergibt.

Der Erfindung liegt die Aufgabe zugrunde, die eingangs geschilderte Vorrichtung so zu gestalten, daß der Schutzkörper unter Beibehaltung des Fertigungstaktes mit vermindertem Aufwand als homogenes Gebilde hergestellt werden kann.

Diese Aufgabe wird gemäß der Erfindung dadurch gelöst,
- daß die Spritzgießeinheit einen um eine Achse drehbaren, mit mindestens zwei Spritzformen bestückten Träger aufweist,
- daß die mit Einlaßöffnungen versehenen Spritzformen in Umfangsrichtung voneinander getrennt im gleichen Abstand von der Achse des Trägers an demselben befestigt sind,
- daß die Spritzgießeinheit außerdem zwei abwechselnd aktive Spritzgießvorrichtungen hat, die in Drehrichtung des Trägers in einem Abstand zueinander angebracht sind, der dem Abstand zweier Spritzformen des Trägers voneinander in Umfangsrichtung entspricht und
- daß die in Richtung auf den Träger verstellbaren Spritzgießvorrichtungen in unmittelbarer Nähe desselben so angeordnet sind, daß die Austrittsöffnungen ihrer Spritzköpfe in Höhe der Einlaßöffnungen der Spritzformen liegen.

Mit dieser Vorrichtung ist es möglich, den Schutzkörper für einen Teil eines elektrischen Steckverbinders vollautomatisch an das Ende einer elektrische Leitung anzuspritzen, und zwar im Zuge einer Vorrichtung, mit der die elektrische Leitung mit taktweisem Vorschub bearbeitet wird. Durch den drehbaren Träger der Spritzgießeinheit, an dem mindestens zwei Spritzformen angebracht sind, ist sichergestellt, daß in jedem Takt der Vorrichtung eine mit Kontaktelementen bestückte Leitung für den Spritzvorgang zur Herstellung des Schutzkörpers übernommen werden kann. Da die Spritzformen am Träger befestigt sind und dementsprechend mit demselben gedreht werden, steht vor dem Entformen des Schutzkörpers genügend Zeit zur Abkühlung des Spritzmaterials zur Verfügung. An der Entnahmestelle, an der die Spritzformen geöffnet werden, kann pro Takt eine fertig konfektionierte Leitung entnommen werden. Der Schutzkörper ist dann bereits soweit verfestigt, daß keine Beschädigungsgefahr besteht.

Ein Ausführungsbeispiel des Erfindungsgegenstandes ist in den Zeichnungen dargestellt.

Es zeigen:

Fig. 1 die Vorrichtung nach der Erfindung in schematischer Darstellung.

Fig. 2 eine Ansicht des Endes einer mit der Vorrichtung konfektionierten Leitung, teilweise im Schnitt.

Fig. 3 und 4 Ansichten einer in der Vorrichtung eingesetzten Spritzgießeinheit in vergrößerter Darstellung.

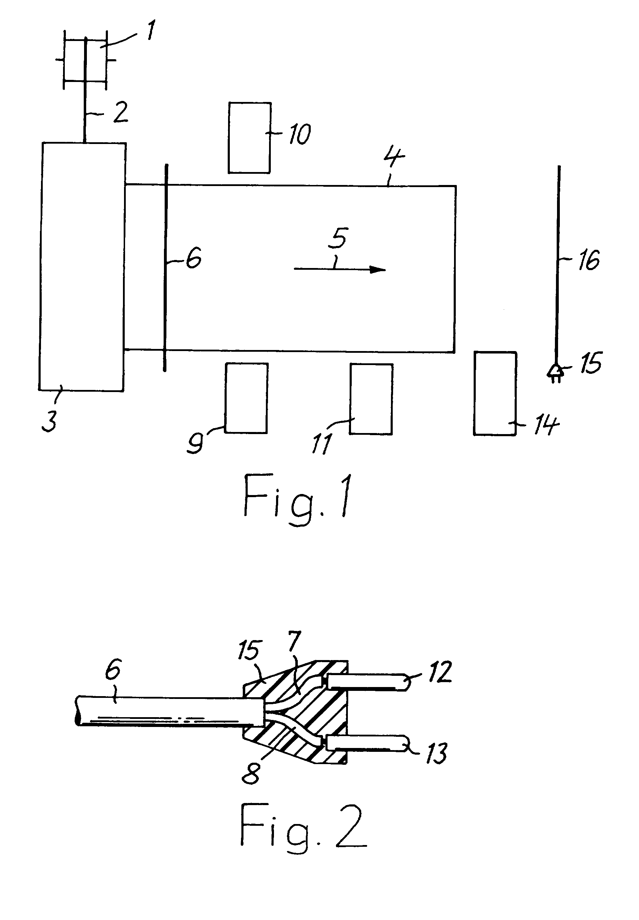

Von einer Spule 1 wird eine elektrische Leitung 2 abgezogen und einer Ablängeinrichtung 3 zugeführt. Die Leitung 2 hat im dargestellten und im folgenden beschriebenen Ausführungsbeispiel zwei Adern. Sie kann aber auch nur eine Ader oder mehr als zwei Adern haben. An die Ablängeinrichtung 3 ist eine Einrichtung 4 angeschlossen, mittels derer die zu bearbeitende Leitung mit taktweisem Vorschub in Richtung des Pfeiles 5 transportiert werden kann. Entlang der Einrichtung 4 sind Bearbeitungsstationen vorhanden, deren Anzahl unterschiedlich sein kann. In Fig. 1 sind nur die Bearbeitungsstationen eingezeichnet, die für das Verständnis der Erfindung erforderlich sind.

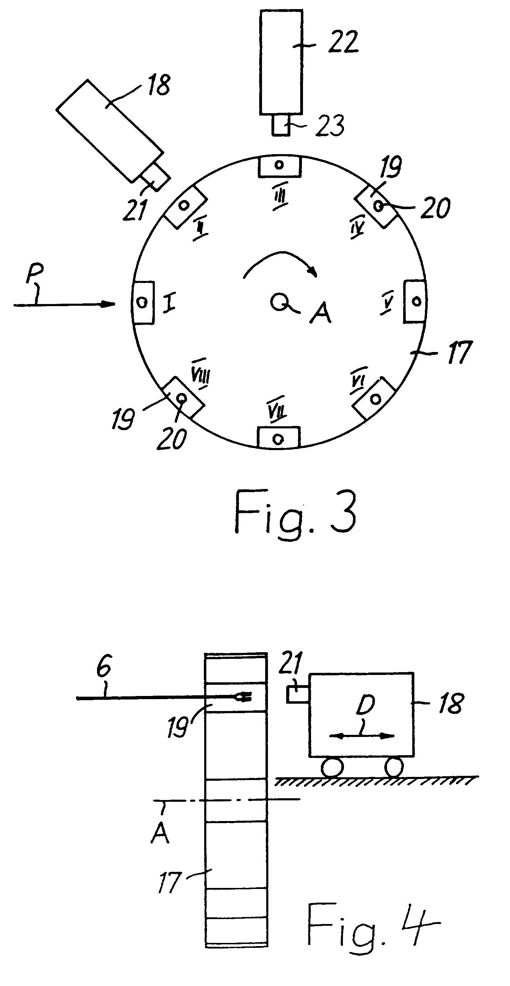

Aus der Ablängeinrichtung 3 tritt eine Leitung 6 aus, die eine vorgegebene Länge hat und bereits abgemantelt sein kann. Es ist jedoch möglich, die Leitung 6 in einer ersten Station abzumanteln. Die durch das Abmanteln freigelegten Adern 7 und 8 der Leitung 6 werden in Bearbeitungsstationen 9 und 10 abisoliert, so daß ihre Leiter freigelegt sind. An einem Ende der Leitung 6 werden an die Leiter in einer Bearbeitungsstation 11 Steckerstifte 12 und 13 als Kontaktelemente angeschlossen. Die Steckerstifte 12 und 13 können durch eine nicht dargestellte Brücke aus Isoliermaterial zu einer Einheit zusammengefaßt sein. Zumindest dieses so vorbereitete Ende der Leitung 6 wird dann in eine Spritzgießeinheit 14 geführt, deren genauerer Aufbau aus den Fig. 3 und 4 hervorgeht. In der Spritzgießeinheit 14 wird um das mit den Steckerstiften 12 und 13 bestückte Leitungsende herum ein Schutzkörper 15 gespritzt. Am Ende der ganzen Vorrichtung liegt dann eine konfektionierte Leitung 16 vor, die als fertiges Produkt verkauft werden kann. Die konfektionierte Leitung 16 weist mindestens an einem Ende einen Teil eines elektrischen Steckverbinders auf.

Das zweite Ende der Leitung 6 wird in der Regel nur in der Bearbeitungsstation 9 abisoliert. Es steht dann zum Anschluß an Geräte zur Verfügung. Prinzipiell können aber auch an dieses Ende Kontaktelemente angeschlossen werden - analog zum für das erste Ende der Leitung 6 beschriebenen Vorgang. Auch dieses Leitungsende könnte in einen Schutzkörper eingebettet werden. Dazu kann eine der Spritzgießeinheit 14 entsprechende Spritzgießeinheit verwendet werden.

Mit der Vorrichtung nach der Erfindung lassen sich sowohl Stecker als auch Dosen vollautomatisch am Ende einer Leitung 6 anspritzen. Die weiteren Erläuterungen werden für einen in Fig. 2 im Schnitt dargestellten Stecker gemacht. Sie gelten in gleicher Weise aber auch für eine Dose.

Die in Fig. 1 angedeutete Spritzgießeinheit 14 besteht aus einem um eine Achse A drehbaren Träger 17 und aus zwei Spritzgießvorrichtungen 18 und 22 - im folgenden wieder als "Extruder" bezeichnet. Jeweils im gleichen radialen Abstand von der Achse A sind am Träger 17 Spritzformen 19 angebracht, in denen jeweils Schutzkörper 15 um das Ende von mit Steckerstiften 12 und 13 bestückten Leitungen 6 herumgespritzt werden.

In bevorzugter Ausführungsform sind am Träger 17 acht in Umfangsrichtung gegeneinander versetzte Spritzformen 19 angeordnet, so wie es in Fig. 3 dargestellt ist. Die Spritzformen 19 haben jeweils eine Einlaßöffnung 20, durch welche das Material des Schutzkörpers 15 in die geschlossene Spritzform 19 eingespritzt werden kann. Dazu sind die Spritzköpfe 21 und 23 der Extruder 18 und 22 so angeordnet, daß ihre Austrittsöffnungen genau in Höhe der Einlaßöffnungen 20 liegen. Die Extruder 18 und 22 sind in Richtung auf den Träger 17 verschiebbar, so wie es in Fig. 4 für den Extruder 18 durch den Doppelpfeil D angedeutet ist.

Im folgenden wird die Funktionsweise der in Fig. 3 dargestellten Vorrichtung erläutert:

Das Ende einer mit Steckerstiften 12 und 13 bestückten Leitung 6 wird in Richtung des Pfeiles P in die geöffnete Spritzform 19 in der Ladeposition I eingelegt. Die Leitung 6 wird dabei möglichst gestreckt gehalten, damit sie nicht direkt an der Spritzform 19 abknickt. Im folgenden Takt der Vorrichtung 4 wird der Träger 17 um einen dem Abstand der Spritzformen 19 voneinander entsprechenden Winkel gedreht. Die Spritzform 19 mit dem eingelegten Leitungsende gelangt dadurch in die Position II. In dieser Position wird sie automatisch geschlossen und von dem Extruder 18 mit Spritzmaterial gefüllt, der dazu dicht an den Träger 17 bzw. die Spritzform 19 herangefahren ist. Nach Füllung der Spritzform 19 fährt der Extruder 18 wieder in seine Ausgangsposition zurück. Die gefüllte Spritzform 19 durchläuft taktweise die Positionen II, III, IV, V und VI. Während dieser Zeit ist das eingespritzte Material des Schutzkörpers 15 ausreichend abgekühlt. Die konfektionierte Leitung 16 kann in der Position VII aus der Spritzform 19 entnommen werden, die dazu geöffnet wird. Die Spritzform 19 gelangt in offener Form über die Position VIII wieder in die Ladeposition I.

Bei jedem Takt der Vorrichtung 4 wird in die jeweils in der Ladeposition I befindliche Spritzform 19 ein mit Steckerstiften 12 und 13 bestücktes Leitungsende eingelegt, so daß bei jedem Takt eine konfektionierte Leitung 16 in der Position VII entnommen werden kann.

Der für acht Spritzformen 19 geschilderte Ablauf gilt auch für jede andere sinnvolle Anzahl von Spritzformen 19, die an einem Träger 17 befestigt sind. Die konfektionierte Leitung 16 könnte auch in einer vor der Position VII liegenden Position oder in Position VIII entnommen werden.

Die Spritzgießeinheit 14 ist mit zwei Extrudern ausgerüstet, nämlich dem Extruder 18 und dem Extruder 22. Der Extruder 22 ist in Position III des Trägers 17 aufgebaut und ebenso verstellbar, wie der Extruder 18. Die damit vollständige Spritzgießeinheit 14 arbeitet beispielsweise wie folgt:

Eine mit Steckerstiften 12 und 13 bestückte Leitung 6 wird in der Ladeposition I in eine Spritzform 19 gegeben (Pfeil P). Um das Ende dieser Leitung 6 wird in Position II der Schutzkörper 15 gespritzt. Die folgenden Positionen III bis VI werden taktweise durchlaufen. Die konfektionierte Leitung 16 wird in Position VII entnommen.

Wenn die erste Leitung 6 in der beschriebenen Weise zur Position II gelangt ist, wird in der Ladeposition I eine zweite Leitung 6 in die dort befindliche Spritzform 19 eingelegt. Diese zweite Leitung 6 passiert die Position II, ohne daß der Extruder 18 aktiv wird. Er kann vielmehr während dieses Taktes gereinigt und neu gefüllt werden, so daß er für die nächstfolgende Leitung 6 wieder bereit ist. Um das Ende der zweiten Leitung 6 wird in Position III der Schutzkörper 15 mittels des Extruders 22 herumgespritzt. Die dadurch geschaffene konfektionierte Leitung 16 kann wieder in Position VII oder in einer anderen Position entnommen werden.

Mit den beiden Extruders 18 und 22 wird also jeweils abwechselnd ein Schutzkörper 15 um das Ende einer Leitung 6 herumgespritzt, wobei jeder Extruder 18 und 22 immer nur bei jeder zweiten Leitung 6 aktiv ist. In der nicht aktiven Zeit können die Extruder 18 und 22 gesäubert und neu gefüllt werden.

## Patentansprüche

1. Vorrichtung zum Anbringen eines Teils eines elektrischen Steckverbinders am Ende einer mindestens eine Ader aufweisenden elektrischen Leitung (6), bestehend aus einer Einrichtung, mit der die Leitung mit taktweisem Vorschub durch Bearbeitungsstationen transportierbar ist, in denen die Ader der Leitung abisoliert und an dem dadurch freigelegten Leiter der Ader ein Kontaktelement (12, 13) angebracht wird, und bei welcher als letzte Bearbeitungsstation eine Spritzgießeinheit (14) angeordnet ist, in der um das Kontaktelement und das Leitungsende ein Schutzkörper (15) aus Isoliermaterial herumgespritzt wird, dadurch gekennzeichnet,
- daß die Spritzgießeinheit (14) einen um eine Achse (A) drehbaren, mit mindestens zwei Spritzformen (19) bestückten Träger (17) aufweist,
- daß die mit Einlaßöffnungen (20) versehenen Spritzformen (19) in Umfangsrichtung voneinander getrennt im gleichen Abstand von der Achse (A) des Trägers (17) an demselben befestigt sind,
- daß die Spritzgießeinheit (14) außerdem zwei abwechselnd aktive Spritzgießvorrichtungen (18,22) hat, die in Drehrichtung des Trägers (17) in einem Abstand zueinander angebracht sind, der dem Abstand zweier Spritzformen (19) des Trägers (17) voneinander in Umfangsrichtung entspricht und
- daß die in Richtung auf den Träger (17) verstellbaren Spritzgießvorrichtungen (18,22) in unmittelbarer Nähe desselben so angeordnet sind, daß die Austrittsöffnungen ihrer Spritzköpfe (21) in Höhe der Einlaßöffnungen (20) der Spritzformen (19) liegen.

## Claims

1. Apparatus for fitting a part of an electrical plug connector to the end of an electrical lead (6) having at least one core, comprising a device by means of which the lead can be transported with a cyclic advance through processing stations in which the insulation is stripped from the core of the lead and a contact element (12, 13) is fitted to the resulting exposed conductor of the core, and in the case of which apparatus an injection-moulding unit (14) is arranged as the last processing station, in which injection-moulding unit a protective body (15) made of insulating material is injection-moulded around the contact element and the end of the lead, characterized
- in that the injection-moulding unit (14) has a carrier (17) which can be rotated about an axis (A) and is equipped with at least two injection moulds (19),
- in that the injection moulds (19), which are provided with inlet openings (20), are fastened to the carrier (17) in a manner separated from one another in the circumferential direction and at the same distance from the axis (A) of the said carrier,
- in that the injection-moulding unit (14) additionally has two alternately active injection-moulding apparatuses (18, 22), which are fitted at a distance from one another in the direction of rotation of the carrier (17), which distance corresponds to the distance between two injection moulds (19) of the carrier (17) in the circumferential direction, and
- in that the injection-moulding apparatuses (18, 22), which can be adjusted in the direction of the carrier (17), are arranged in the direct proximity of the latter in such a way that the exit openings of their injection heads (21) are situated at the level of the inlet openings (20) of the injection moulds (19).

## Revendications

1. Dispositif pour mettre une partie d'un connecteur électrique sur l'extrémité d'un fil électrique 6 présentant au moins un conducteur, dispositif qui consiste en une installation avec laquelle le fil peut être transporté, par avancement cadencé, à travers des postes de traitement, dans lesquelles le conducteur du fil est débarrassé de son isolant et un élément de contact (14,13) est mis sur le fil du conducteur, libéré de cette façon et dans le cas de laquelle on dispose comme dernier poste de traitement une unité d'injection de matière thermo-durcissable (14), avec laquelle on injecte autour de l'élément de contact et de l'extrémité du fil un corps de protection (15) en matière isolante, dispositif caractérisé en ce que :
- l'unité d'injection de matière thermo-durcissable (14) présente un support (17) pourvu d'au moins deux moules d'injection (19) et pouvant tourner autour d'un axe (A).
- les moules d'injection (19), pourvus des orifices d'admission (20), séparés les uns des autres dans le sens périphérique, sont fixés au support (17) à la même distance de l'axe (A) de celui-ci.
- l'unité d'injection de matière thermo-durcissable (14) a en outre deux dispositifs d'injections (18,22), qui sont actifs de façon alternative, et qui sont disposés dans le sens de rotation du support (17) à une distance l'un de l'autre, qui correspond à la distance de deux moules d'injection (19) du support (17) l'un de l'autre dans le sens périphérique et
- les dispositifs d'injection (18,22) que l'on peut déplacer en direction du support (17) sont disposés à proximité immédiate de celui-ci d'une manière telle que les orifices de sortie de leurs têtes d'injection se trouvent à la hauteur des orifices d'admission (20) des moules d'injection (19)
